# NEUE EUROPÄISCHE PATENTSCHRIFT

(11) **EP 1 071 883 B2**
(45) Veröffentlichungstag und Bekanntmachung des Hinweises auf die Entscheidung über den Einspruch: **21.06.2017**
(45) Hinweis auf die Patenterteilung: 05.01.2005
(21) Anmeldenummer: 99920647.7
(22) Anmeldetag: 13.04.1999
(51) Int. Cl.: F03D 80/80

(54) **WINDENERGIEANLAGE MIT TRANSFORMATOR**
WIND POWER PLANT WITH A TRANSFORMER
CENTRALE EOLIENNE DOTE D'UN TRANSFORMATEUR

(30) Priorität: 14.04.1998 DE 19816483
(43) Veröffentlichungstag der Anmeldung: 31.01.2001
(60) Teilanmeldung: 02025834.9
(73) Patentinhaber: Wobben, Aloys, 26607 Aurich (DE)
(72) Erfinder: Wobben, Aloys, 26607 Aurich (DE)
(74) Vertreter: Eisenführ Speiser
(86) Internationale Anmeldenummer: PCT/EP1999/002461
(87) Internationale Veröffentlichungsnummer: WO 1999/053199

(56) Entgegenhaltungen:
- DE-A- 4 436 197
- DE-A1- 19 615 795
- GB-A- 703 577
- JP-A- 07 122 438
- US-A- 3 706 839
- US-A- 4 025 824
- US-A- 4 037 989
- US-A- 4 357 542
- US-A- 4 565 929
- US-A- 5 244 569

## Beschreibung

Die Erfindung betrifft eine Windenergieanlage mit den Merkmalen des Oberbegriffs des Anspruchs 1.

Eine solche Windenergieanlage ist bekannt aus den Entgegenhaltungen DEWI, "Kurze Einführung in die Windenergietechnologie, 31.01.1993; David A. Spera; "Wind Turbine Technology", ASME Press, 1994, Seiten 50, 56 und 61; Vestas, "1,65 MW Vestas V66-1,65 MW Pitch-geregelte Windenergieanlage mit OptiSlip und OptiTip", 12/1996; European Commision WEGA II Large Wind Turbines, Report EUR 16902 EN, "Vestas V 63 - 1.5 MW", 1996 (ISBN 92-827-8903-9); B. Björk, "A Feasibility Study on Offshore Wind Turbine Systems", Wind Engineering, Vol. 9 No. 4; 1985, Seiten 243 bis 255; Summary Report, "A study of Offshore based wind power - The Blekinge Project (Sweden)", 05/1991; Olsen/Dyre: "Vindeby Off-Shore Wind Farm - Construction and Operation", Wind Engineering Vo. 17 No. 3, 1993, Seiten 120 bis 128; van de Sande: "Windfarm 'Lely' - First Off-Shore Project in the Netherlands", OWEMES European Seminar 10-11 April 1997, La Maddalena, Italy, Seiten 327 bis 337; Stiesdal et al: "The World's First Offshore Wind Farm - A Manufacturer's Experience", OWEMES Seminar 10-11 April 1997, La Maddalena, Italy, Seiten 339 bis 345 oder DE 196 15 795 A1.

Die vorgenannten Entgegenhaltungen offenbaren einerseits, dass der Transformator direkt auf dem Fundament aufgesetzt sein kann, der Transformator im Turm der Windenergieanlage untergebracht sein kann oder der Transformator im Maschinenhaus (Gondel) einer Windenergieanlage untergebracht werden kann.

Ferner ist es auch bekannt, bei einer Windenergieanlage neben dem Fundament eine Transformatorstation vorzusehen.

Mit Hilfe solcher bekannten Windenergieanlagen wird die im Wind gespeicherte Energie über einen sich im Wind drehenden Rotor und einem von dem Rotor angetriebenen Generator in elektrische Energie umgewandelt. Um in einer Höhe optimaler Windgeschwindigkeiten angeordnet zu sein, befindet sich der Rotor zumeist an der Spitze eines Turmes. Aufgrund des nicht unerheblichen Gewichtes der Gesamtanlage und der Belastungen bei hohen Windgeschwindigkeiten muss die gesamte Anlage mit Hilfe eines Fundaments im Boden verankert sein.

Darüber hinaus ist es bekannt, dass der von der Windenergieanlage erzeugte Strom über eine im Boden verlegte Leitung zu einer Energieübergabeeinheit zum Übergeben des erzeugten Stromes an das Stromnetz weitergeleitet wird. Diese Energieübergabeeinheit, die zumeist einen Transformator enthält, befindet sich dabei in einiger Entfernung von dem Turm und ist zumeist aufgrund ihres ebenfalls nicht unerheblichen Gewichtes am Boden mit einem Fundament verankert.

Nachteilig bei Windenergieanlagen, wie sie aus US-A-4,565,929 bekannt sind, ist es, dass diese relativ unflexibel bei ihrer Aufstellung sind. Oftmals kommen da die Anlagen in Gebieten zum Einsatz, in denen es beispielsweise aufgrund eines aus Stein bestehenden Bodens nur unter extrem hohem Aufwand möglich ist, ein Fundament in den Boden zu treiben. Die Installation der Energieübergabeeinheiten in beabstandeter Position von dem Turm der Windenergieanlage führt daher oft zu erheblichen Schwierigkeiten und somit zu erhöhten Kosten bei der Aufstellung.

Aus US-A-4,357,542 ist eine Windenergieanlage bekannt, bei welcher der von einem Generator erzeugte Strom direkt in ein Stromnetz abgegeben wird.

Aus US-A-4,025,824 ist eine Transformatorhalterung an einem Mast bekannt.

Ein separates Fundament kann dann vermieden werden, wie aus den eingangs genannten Dokumenten bekannt ist, wenn die Energieübergabeeinheit, die regelmäßig einen Transformator enthält, direkt auf dem Fundament der Windenergieanlage aufgesetzt wird oder im Turm der Windenergieanlage untergebracht wird.

Ferner ist aus DE 196 15 795 A1 bekannt, eine Windenergieanlage auf eine stabile Stützkonstruktion aufzusetzen, wobei dann diese Stützkonstruktion auch einen Transformator der Windenergieanlage tragen kann. Eine solche Stützkonstruktion ist jedoch von ihrer Herstellung her extrem kompliziert und benötigt eine Vielzahl von einzelnen Fundamenten für jede vertikal ausgerichtete Stütze der Stützkonstruktion.

Weiterhin nachteilig ist bei einer Windenergieanlage, wie sie aus US-A-4,565,929 bekannt sind, dass die Energieübergabeeinheiten durch ihre Position am Boden für jedermann zugänglich sind und somit das Opfer einer Sabotage werden können. Um eine solche Sabotage durch unbefugte Dritte zu verhindern, ist es zwar bekannt geworden, die Energieübergabeeinheiten derartiger Windenergieanlagen mit entsprechend gesicherten Öffnungen oder gar Umzäunungen zu versehen - dies ist jedoch aufgrund der zusätzlichen Kosten ebenfalls nachteilig.

Bei Windenergieanlagen, die den Transformator in ihrem Inneren (weil der Turm hohl ist) - sei es im Turm oder im Maschinenhaus - aufnehmen, ist es regelmäßig notwendig, dass dieser Transformator erreichbar ist und im Bedarfsfall auch ausgetauscht werden kann. Mithin muss eine Windenergieanlage, bei welcher der Transformator im Turm untergebracht ist, auch eine entsprechende Öffnung aufweisen, wobei diese Öffnung groß genug sein muss, um den Transformator in den Turm hinein oder aus ihm heraus zu transportieren. Eine solche relativ große Öffnung im Turm beeinflusst in nicht geringer Weise die gesamte Stabilität des Turmes. Wird der Transformator im Maschinenhaus der Windenergieanlage positioniert, so ist auch der Austausch eines solchen Transformators wiederum sehr kompliziert, weil solche Transformatoren regelmäßig sehr schwere Teile sind und bei der üblichen Höhe des Maschinenhauses auf dem Turm von Windenergieanlagen ein Austausch eines solchen Transformators nur durch Spezialkräne durchgeführt werden kann.

Aufgabe der Erfindung ist es daher, die beschriebenen Nachteile des Standes der Technik zu vermeiden und eine Windenergieanlage der eingangs genannten Art weiterzubilden, die auch in unwirtlichen Gebieten aufstellbar ist und wirksam eine Sabotage durch unbefugte Dritte erschwert.

Diese Aufgabe wird mit einer Windenergieanlage mit den Merkmalen nach Anspruch 1 gelöst.

Die Vorteile der Erfindung liegen insbesondere darin, dass bei der Platzierung der Energieübergabeeinheit (des Transformators) auf einer Plattform außen am Turm der Windenergieanlage kein zusätzliches Fundament für den Transformator in den Boden eingebracht werden muss.

Erfindungsgemäss ist der Transformator außen am Turm befestigt. Bei dieser erfindungsgemässen Ausführungsform ist der Transformator zwar nicht derart wettergeschützt, wie bei der Unterbringung im Inneren des Turmes; er ist jedoch vorteilhaft dem kühlenden Wind ausgesetzt, so das beispielsweise eine Kühlung des Transformators, wie sie insbesondere in heißen Gebieten möglicherweise notwendig ist, entfallen kann. Darüber hinaus greifen bei dieser erfindungsgemässen Ausführungsform mögliche Fehlfunktionen des Transformators, die beispielsweise einen Brand verursachen können, nicht direkt auf die Gesamtanlage über.

Erfindungsgemäss befindet sich der Transformator in etwa in der Höhe einer Überlandstromleitung (über dem Fundament) des Stromnetzes, an welchem die Windenergieanlage angeschlossen ist. Erfindungsgemäss wird daher der Strom direkt in der Höhe der Überlandstromleitung an diese übergeben, so dass keinerlei zusätzliche Leitungen von dem Transformator auf die nicht unerhebliche Höhe gebräuchlicher Überlandstromleitungen erforderlich sind. Darüber hinaus müssen bei dieser erfindungsgemässen Ausführungsform die Überfandstromleitungen auch nicht in die Nähe des Bodens heruntergeführt werden, so dass diese erfindungsgemässe Ausführungsform sich ebenfalls durch eine erhöhte Sabotagesicherung auszeichnet.

Eine Ausführungsform der Erfindung wird nunmehr mit Bezug auf die anliegende Zeichnung beschrieben.

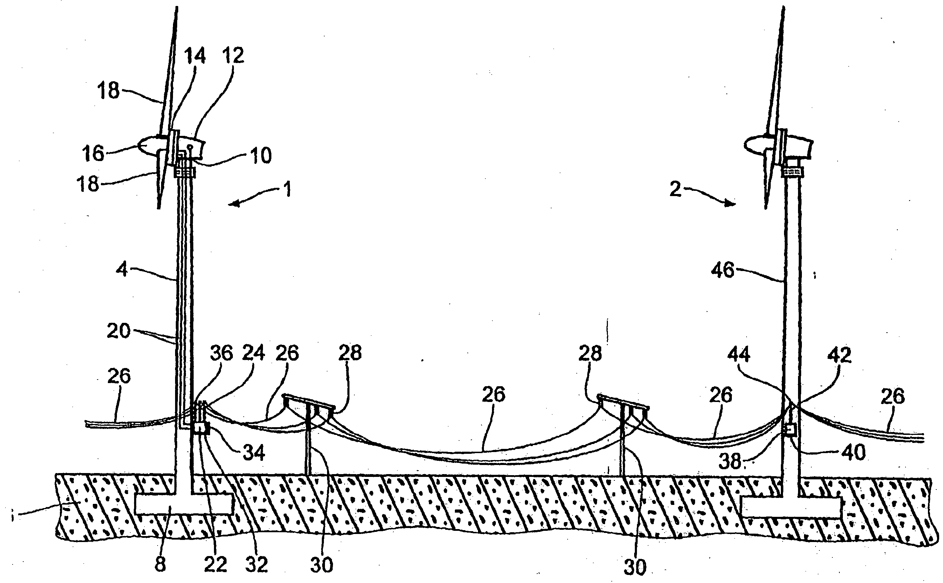

Die einzige Figur der Zeichnung zeigt skizzenartig die erfindungsgemäße Windenergieanlage.

Die Figur zeigt in ihrem linken Teil eine teilweise geschnittene Windenergieanlage 1. Die Figur zeigt in ihrem rechten Teil eine Windenergieanlage 2. In der Figur ist die Windenergieanlage 1 teilweise im Schnitt von der Seite gesehen dargestellt. Die Windenergieanlage 2 ist ebenfalls in einer Seitenansicht, aber ungeschnitten, dargestellt. Die Windenergieanlagen 1 und 2 sind in ihrem Aufbau identisch, so dass hier nur die links dargestellte Windenergieanlage 1 in ihrem Aufbau beschrieben wird.

Die Windenergieanlage 1 weist einen senkrecht zum Boden 6 angeordneten Turm 4 auf. Der Turm 4 der Windenergieanlage 1 ist im Boden 6 durch ein Fundament 8 verankert. Das Fundament 8 weist gegenüber dem Durchmesser des Turmes 4 einen vergrößerten Durchmesser auf.

An der Spitze 10 des Turmes 4 ist ein Maschinenhaus 12 angebracht. In dem Maschinenhaus 12 befinden sich (nicht dargestellte) Nebenaggregate der Windenergieanlage 1. Direkt anschließend an das Maschinenhaus 12 befindet sich ein Generator 14. Der Generator 14 wandelt die Rotationsenergie der mit ihm verbundenen Rotornabe 16 in elektrische Energie um. Die Rotomabe 16 wird durch Rotorblätter 18, die sich aufgrund eines Flügelprofils im Wind drehen, in Rotation versetzt.

Die gewonnene elektrische Energie wird von dem Generator 14 über Leitungen 20 einem als Energieübergabeeinheit fungierenden Transformator 22 zur Verfügung gestellt. Der Transformator 22 speist die transformierte elektrische Energie über Trennschalter 24 in Überlandstromleitungen 26 ein. Die Überlandstromleitungen 26 sind über Isolatoren 28 an Masten 30 aufgehängt.

Der Transformator 22 ist unmittelbar am Turm 4 angeordnet. Der Transformator 22 befindet sich auf einer Plattform 32. Die Plattform 32 weist an ihrem turmfemen Ende eine Begrenzungswand 34 auf. Die Plattform 32 befindet sich im wesentlichen in der Höhe der Überlandstromleitungen 26, so dass die Befestigungspunkte 36, die oberhalb der Trennschalter 24 zur Befestigung der Überlandstromleitung 26 oberhalb des Transformators 22 an dem Turm 4 dienen, sich im wesentlichen in gleicher Höhe wie die Isolatoren 28 befinden. Der Turm 4 übt daher in der dargestellten Ausführungsform auch die Funktion eines Mastes 30 aus.

In der rechten Hälfte der Figur ist eine Windenergieanlage 2 dargestellt, die baugleich zu der Windenergieanlage 1 ist. In der Darstellung ist jedoch der Transformator 38 um 90° verdreht auf der dem Betrachter der Zeichnung zugewandten Seite der Windenergieanlage 2 angebracht. Darüber hinaus ist in der Figur eine der Begrenzungswand 34 der Plattform 32 entsprechende Begrenzungswand für die Plattform 40 der Windenergieanlage 2 nicht dargestellt. Der Transformator 38 ist jedoch ebenfalls über Trennschalter 42 mit an Befestigungspunkten 44 am Turm 46 befestigten Überlandstromleitungen 26 verbunden.

## Patentansprüche

1. Windenergieanlage mit einem Generator (14) und einem Turm (4, 46), der auf einem Fundament gründet, mit einem mit dem Generator (14) verbundenen Transformator (22, 38), wobei das Gewicht des Turms, des Generators und des Transformators allein von dem Fundament der Windenergieanlage getragen wird, **dadurch gekennzeichnet, dass** der Transformator auf einer außen am Turm (4, 46) befestigten Plattform (32, 40) angeordnet ist und dass der Transformator (22, 38) im Wesentlichen in Höhe von Überlandstromleitungen (26) oberhalb des Fundaments angeordnet ist und der Strom direkt in der Höhe der Überlandstromleitung an diese übergeben wird.

## Claims

1. Wind energy installation having a generator (14) and a tower (4, 46) which is based on a foundation, and having a transformer (22, 38), which is connected to the generator (14), with the weight of the tower, of the generator and of the transformer being borne solely by the foundation of the wind energy installation, **characterized in that** the transformer is arranged on a platform (32, 40) which is attached to the outside of the tower (4, 46), and **in that** the transformer (22, 38) is arranged essentially at the same level as overland power lines (26) above the foundation, and the current is transferred to the overland power line directly at the same level thereof.

## Revendications

1. Centrale éolienne avec un générateur (14) et un mât (4, 46), qui est fondé sur une fondation, avec un transformateur (22, 38) raccordé au générateur (14), dans laquelle le poids du mât, du générateur et du transformateur est porté uniquement par la fondation de la centrale éolienne, **caractérisée en ce que** le transformateur est disposé sur une plate-forme (32, 40) fixée à l'extérieur du mât (4, 46) et **en ce que** le transformateur (22, 38) est disposé sensiblement à la hauteur de lignes électriques aériennes (26) au-dessus de la fondation et l'électricité est transmise directement à la hauteur de la ligne électrique aérienne à celle-ci.
